# EUROPÄISCHE PATENTSCHRIFT

(11) **EP 0 595 359 B1**
(45) Veröffentlichungstag und Bekanntmachung des Hinweises auf die Patenterteilung: **20.12.1995**
(21) Anmeldenummer: 93117624.2
(22) Anmeldetag: 29.10.1993
(51) Int. Cl.: C02F 3/12, C02F 3/32

(54) **Verfahren und Vorrichtung zum Reinigen von Abwasser**
Method and device for wastewater purification
Procédé et dispositif pour la purification de l'eau usée

(30) Priorität: 30.10.1992 DE 4236791
(43) Veröffentlichungstag der Anmeldung: 04.05.1994
(73) Patentinhaber: Von Nordenskjöld, Reinhart, Dr.-Ing., D-85658 Egmating-Münster (DE)
(72) Erfinder: von Nordenskjöld, Reinhart Dr., D-85658 Egmating/Münster (DE); Kröner, Peter, D-81677 München (DE)
(74) Vertreter: Grünecker, Kinkeldey, Stockmair & Schwanhäusser Anwaltssozietät

(56) Entgegenhaltungen:
- EP-A- 0 048 630
- EP-A- 0 237 391
- EP-A- 0 247 519
- DE-A- 2 741 142
- DE-B- 1 246 598

## Beschreibung

Die Erfindung betrifft ein Verfahren und eine Vorrichtung zum Reinigen von Abwasser in mehreren aufeinanderfolgenden Phasen, wobei in einer ersten Phase (A) das Abwasser belüftet und dann in einer zweiten Phase (B), die auch eine Schlammrückkführung aufweist, zwischengeklärt wird, und wobei dann in einer dritten Phase (C) eine Nachbelüftung und in einer vierten Phase (D) eine Nachsedimentation erfolgt.

Ein derartiges Verfahren und eine Vorrichtung ist aus der deutschen Offenlegungsschrift 28 57 345 bekannt. Diese Vorrichtung umfaßt voneinander getrennt ein Belebtschlammbecken mit einem Schlammabsetzbereich, ein Nachbelüftungsbecken, sowie ein Absetzbecken und ein Stapelbecken. Die jeweiligen Becken sind im wesentlichen rechteckig geformt und mit entsprechenden Rohrleitungen untereinander verbunden. Nachteilig an dieser Vorrichtung ist, daß sie relativ viel Platz in Anspruch nimmt, teuer im Bau ist und teure Rohrleitungssysteme, Armaturen und Dämme zur Leitung des Abwassers von einem Becken zum nächsten notwendig sind. Außerdem ist die jeweilige Beckengröße für die einzelnen Phasen durch den Bau vorgegeben und kann nicht nachträglich veränderlichen Klärprozessen angeglichen werden. Auch benötigt der Aufbau ungünstig viel Höhendifferenz, da von Becken zu Becken Strömungsverluste auftreten.

Weiterhin ist durch die EP-A-0 048 670 ein Verfahren zum Reinigen von Abwasser bekannt, bei welchen das Abwasser zuerst eine Belüftungszone und eine Trennzone durchläuft und anschließend dieser Prozeß nochmals wiederholt wird.

Ausgehend von dem erst genannten Stand der Technik liegt der Erfindung die Aufgabe zugrunde, ein Verfahren und eine Vorrichtung vorzuschlagen, die einen noch einfacheren, platzsparenderen und kostengünstigeren Aufbau erlauben. Weiterhin soll mit dem Verfahren bei einer bevorzugten Ausführungsform die Kapazität der Anlage im wesentlichen durch Variation der Phasenvolumina bzw. Phasenflächen an die jeweiligen Lastenphasen und Klärprozesse angepasst werden.

Erfindungsgemäß wird diese Aufgabe durch ein Verfahren mit den Merkmalen des Anspruchs 1 gelöst.

Dabei werden alle Phasen kontinuierlich, d.h. zeitgleich in einem Becken durchgeführt. Dieses Verfahren bringt den Vorteil mit sich, daß keine teuren Rohrleitungssysteme, Armaturen und Dämme notwendig sind, um verschiedene Phasen miteinander zu verbinden. Bedingt durch den einfachen räumlichen Aufbau von nur einem Becken können Platz, Bau- und Betriebskosten gespart werden. Auch gestattet diese Bauweise mit einem Minimum an Höhenverlust im Verlauf der Becken auszukommen.

Das Becken kann in Erdbauweise durch Aushub einer entsprechenden Beckenform gebaut sein. Der Beckenboden ist mit Dichtungsbahnen, z.B. Folie abgedeckt.

In der Belüftungsphase wird das Abwasser in einen Belebtschlammbereich des Beckens eingelassen, mit Luft oder Sauerstoff belüftet und umgewälzt, so daß ein aerober Abbauprozeß ablaufen kann.

Das Abwasser strömt aus dem Belebtschlammbereich durch mindestens eine Auslaßöffnung, die im unteren Bereich in bezug auf den Beckenboden einer ersten Trennwand angebracht ist, wo es äußerst langsam, d.h. bereits beruhigt ankommt. Somit kann sich der Schlamm am Boden dieses folgenden Bereichs dem Zwischenklärbereich des Beckens absetzen und mit Hilfe eines Schlammaufnehmers abgesaugt werden.

Das Abwasser in der "Zwischenklärzone" kann dann in Strömungsrichtung aus dem Zwischenklärbereich über Auslauföffnungen am in bezug auf den Beckenboden oberen Bereich einer zweiten Trennwand in den Nachbelüftungsbereich strömen. Die Auslauföffnungen befinden sich in der Klarwasserzone unterhalb der Wasseroberfläche, so daß sichergestellt ist, daß nur wenige Schwebeteilchen mit in den nächsten Bereich strömen aber auch ggf. auftretende Schwimmkomponenten zur gezielten Entfernung zurückgehalten werden.

Das Abwasser wird dann in einer weiteren Nachtelüftungsphase umgewälzt und belüftet und fließt dann durch den unteren Bereich einer weiteren Trennwand hindurch in den zweiten Nachsedimentationsbereich. Dort können sich restliche Teilchen absetzen, die wieder mit Hilfe eines Schlammaufnehmers aufgenommen werden können.

Nach dieser Klärung kann das gereinigte Abwasser durch weitere Pflanzen und Endfilter strömen, um die Wasserqualität noch weiter zu verbessern. Diese Bereiche können auch den Hauptbereichen zugeordnet sein. Auch können besondere Vorbehandlungszonen wie z.B. ein Bio-P-Becken den Hauptbereichen (A-D) direkt vorgeschaltet sein. Alle Bereiche sind dann eben nicht durch Erddämme, oder wie in Betonanlagen üblich feste Betonwände, voneinander getrennt, sondern durch in der Regel auch nachträglich in Längsrichtung verschiebbare leichte Wände, die nach Errichtung des eigentlichen Gesamtbeckens installiert werden.

Dadurch, daß das Wasser an gegenüberliegenden Seiten des Beckens zu- bzw. abfließt, entsteht zwangsläufig im Becken von der Zulaufseite zur Ablaufseite eine Strömung. Diese bringt den Vorteil mit sich, daß keine räumliche Trennung einzelner Reinigungsphasen in mehreren Becken notwendig ist, da es zu keinem Vermischen oder Rückfluß des Abwassers in verschiedenen Phasenbereich kommen kann.

Die Volumina der einzelnen Phasenbereiche sind variabel und können durch geeignete veränderliche Positionierung der Trennwände an den Reinigungsprozeß angepaßt werden.

Vorteilhaft an dieser Lösung ist, daß die Abmessung und vor allem die Volumina bestimmter Klärbereiche nicht durch den Bau vorherbestimmt sind, sondern somit auch nachträglich nach Inbetriebnahme der Kläranlage noch angepaßt werden können, um somit ideale Klärprozeßbedingungen zu schaffen und sich Steigerungen oder Veränderungen in den Belastungen anpassen zu können. So kann beispielsweise bei Unterbelastung der Belebtschlammbereich, in dem die Belüftungsphase abläuft, durch geeignete Positionierung der Trennwand zur Zwischenklärzone verkleinert werden z.B. um zu verhindern, daß Bakterien durch Unterbelastung absterben. Bei Überlast kann das Belebtschlammbecken vergrößert werden um somit die Kapazität der Anlage zu steigern bzw. anzupassen.

Eine Vorrichtung zur Durchführung des Verfahrens weist die Merkmale des Anspruchs 7 auf. Dabei ist vorgesehen, daß folgende Bereiche in Hauptströmungsrichtung vorhanden sind: Belebtschlammbereich, Zwischenklärbereich, Nachbelüftungsbereich und Nachsedimentationsbereich.

Zusätzlich können noch durch eine Trennwand angeordnet Bio-P-Becken wieder durch eine Trennwand abgesondert vorgeschaltet oder Filter, z.B. Pflanzen und Endfilter am Ende in das Becken integriert werden, die vorteilhaft nach dem Nachsedimentationsbereich zumeist auf höherem Boden-Niveau im Bereich der Klarwasserzone liegen. Werden zwei Filter, z.B. Pflanzen und Endfilter eingesetzt, so sind diese durch eine weitere Trennwand getrennt. Diese Trennwand vergleicmäßigt den Wasserstrom von E nach F auf seine ganze Länge. Eine weitere Ausgestaltung der Erfindung weist die Merkmale des Anspruchs 15 auf.

In vorteilhafter Ausgestaltung endet der Zwischenklärbereich in einer schräg nach oben unter einem bestimmten Winkel ansteigenden Trennwand, die erfindungsgemäß an ihrem in bezug auf den Beckenboden oberen Bereich mindestens eine Auslauföffnung aufweist, um einen Fluß aus dem Zwischenklärbereich in den Nachbelüftungsbereich zu ermöglichen. Die Belebtschlammzone A endet in einer schräg nach oben, unter einem bestimmten Winkel ansteigenden Trennwand, die erfindungsgemäß an ihrem in bezug auf den Beckenboden unteren Bereich mindestens eine Auslaßöffnung aufweist, um einen Fluß aus dem Belebtschlammbereich in den Zwischenklärbereich zu ermöglichen, wobei die Auslaßöffnung in einem Bereich vom Beckenboden bis maximal 30 % der Trennwandhöhe angeordnet ist. Somit ist der Zwischenklärbereich durch die beiden Trennwände sozusagen trichterförmig begrenzt.

Die Steigung der Trennwände kann über Gelenke eingestellt werden und somit verschiedenen Klärbedingungen angepaßt werden.

Eine weitere Trennwand trennt auch die Nachbelüftungszone von der Nachsedimentationszone, die an ihrem in Bezug auf den Beckenboden unteren Bereich mindestens eine Durchflußöffnung aufweist.

Diese Durchflußöffnungem sind in einem Bereich vom Beckenboden bis maximal 30 % der Tauchwandhöhe angeordnet.

In weiterer vorteilhafter Ausgestaltung ist mindestens eine der Trennwände eine Tauchwand.

Die Trennwände können ortsfest im Becken ausgebildet sein, oder aber in Beckenlängsrichtung beweglich justierbar, um die Volumina der einzelnen Bereiche verändern zu können. Durch Positionieren der Trennwänden, kann das Becken den jeweiligen Klärprozeß und der jeweiligen Last entsprechend in verschiedene beliebige Teilbereiche eingeteilt werden. Hier kommt es dem System entgegen, daß man auch die Belüfterketten baukastenähnlich wegnehmen oder installieren bzw. ergänzen oder erweitern kann. Auch die in der Regel schwimmend ausgeführte Entnahmeeinrichtung ist versetzbar und an den jeweiligen Sedimentationsbereich anpaßbar.

Der Zwischenklärbereich und der Nachsedimentationsbereich weisen bevorzugt eine horizontale Absetzfläche und Schlammaufnehmer auf. Die horizontale Absetzfläche bringt den Vorteil mit sich, daß eine besondere Befestigung des Beckenbodens in der Absetzzone entfällt, und insbesondere keine Betonarbeiten oder dergl. erforderlich sind, was wiederum die einfache Erdbauweise ermöglicht, und weiter den Vorteil mit sich bringt, daß die Bereiche der einzelnen Klärphasen frei über die ganze Beckenfläche plaziert werden können.

Es kann jedoch auch eine Schlammrinne in dem Zwischenklärbereich ausgebildet sein, die auch eine Eindickzone bis unterhalb der sonstigen Beckensohle aufweisen kann.

Auch können bestimmte festliegende an sich horizontale Zonen tiefer als der sonstige Beckenboden liegen.

Der Beckenboden kann im Bereich der Trennwände verstärkt werden.

Um bei großer Last ausreichend Kapazität zu gewährleisten, können zwei oder mehrere Becken parallel zueinander angeordnet sein, die bei Bedarf in Betrieb genommen werden können.

Neben dem Becken kann ein zusätzliches Schlammpolderbecken angeordnet sein, worin der abgesetzte Schlamm gespeichert wird, um diesen der Landwirtschaft oder einer Entwässerung oder auch erneut zur Impfung des Belebtschlammbereichs zuzuführen.

Am hinteren Ende der Zonen D oder G oder F kann ein Schwimmerüberlauf ausgebildet sein, über den das gereinigte Wasser abgeleitet wird, und der in seiner Durchflußleistung eingestellt werden kann, wodurch unabhängig vom Zulauf ein gleichmäßig eingeregelter Abfluß erreicht werden kann. So werden Zulaufmengenschwankungen durch Aufpufferung an der Beckenoberfläche vergleichmäßigt.

Die Erfindung wird im folgenden anhand der in der Zeichnung dargestellten Ausführungsbeispiele beschrieben.
- Figur 1: zeigt eine schematische Draufsicht auf eine Vorrichtung zum biologischen Reinigen von Abwasser gemäß der Erfindung,
- Figur 2: zeigt eine Schnittdarstellung der Linie II-II der Figur 1.

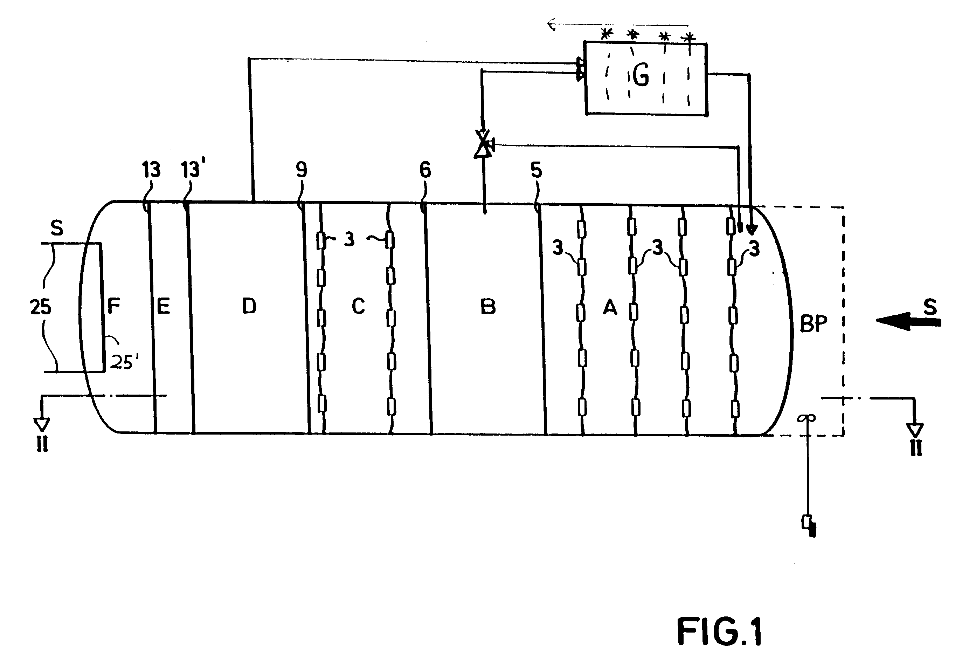

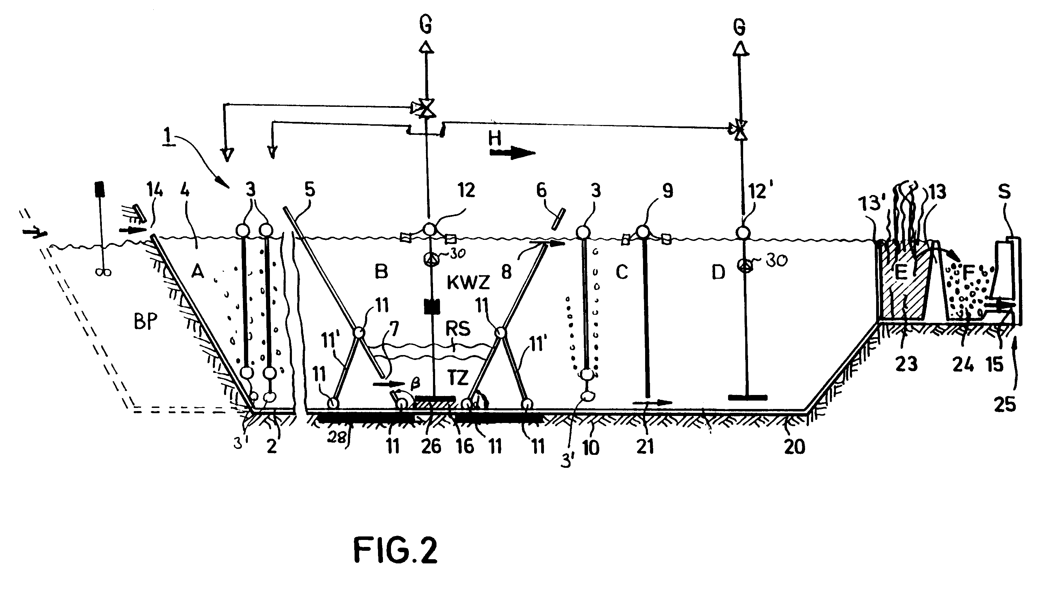

Anhand von Figur 1 und 2, die schematisch den Aufbau der Vorrichtung eines Ausführungsbeispiels der Erfindung zur biologischen Abwasserreinigung zeigt, soll das grundsätzliche Funktionsprinzip des Verfahrens und der Vorrichtung gezeigt werden.

Figur 1 zeigt ein Beckenl zum Reinigen von Abwasser und ein zusätzliches Schlammpolderbecken G. Dabei ist das Becken durch die Trennwände 5, 6, 9, 13, 13', 14 in Hauptströmungsrichtung in folgende Bereiche unterteilt: Bio-P-Becken BP, Belebtschlammbereich A, Zwischenklärbereich B, Nachbelüftungsbereich C, Nachsedimentationsbereich D und Pflanzen- und Endfilterbereich E, F. Am Ende des Beckens 1 befindet sich je nach seiner Gesamtausbildung in D, E oder F ein Schwimmüberlauf S mit einem fest installierten Ablaufrohr 25 und einem schwimmend angeordneten Ablaufrohr 25', durch die das gereinigte Wasser abgeleitet wird. In den Bereichen A und C befinden sich Belüftungsvorrichtungen, z.B. Belüfterketten mit in Figur 2 schematisch dargestellten Bodenbelüftern 3'.

Das Becken 1 hat im dargestellten Beispiel eine Rechteckform, wobei die Beckenlänge üblicherweise zwischen 50 m und 200 m und die Beckenbreite zwischen 20 m und 100 m betragen kann. Es sind Beckentiefen von ca. 3 bis 6 m üblich. Selbstverständlich sind auch andere Beckenformen und -abmessungen denkbar, z.B. kann bei C oder D ein rechtwinkeliger oder ein duch 180° zurückführender Fortlauf des Beckens vorliegen. Die Breite der Einzelzonen kann verschieden sein und z.B. auch in E und F eine höhere Sohle vorliegen.

Das Becken kann in Erdbauweise durch Aushub der entsprechenden Beckenform gebaut sein. Der Beckenboden 20 und die Schrägzonen sind wie in Figur 2 ersichtlich mit ein- oder mehrlagigen Dichtungsbahnen 2 abgedeckt.

Am vorderen Ende in bezug zur Hauptströmungsrichtung H sind an der Beckenwand Einlaufvorrichtungen 14 vorgesehen. Im Belebtschlammbereich A, der als Einzelnes gesehen den größten Teil der Beckenlänge beansprucht, sind quer zum Becken flexible Ketten über Schwimmer 3 gehalten, an denen bodennahe Belüftungskörper 3' befestigt sind, die über den größten Teil des Beckens 1 bis zur Trennwand 5 hin Luft bzw. Sauerstoff eintragen und das Abwasser 4 und in A auch den Schlamm umwälzen.

Diese Art der Belüftung ist auch in der auf denselben Anmelder zurückgehenden Patentschrift DE-A-28 57 345 beschrieben, auf die diesbezüglich bezug genommen wird. In Figur 2 sind nur zwei Belüftungsvorrichtungen 3 schematisch dargestellt. Sie decken jedoch im wesentlichen flächig den gesamten Bereich vor der Trennwand 5 mit ihren hin- und hergehenden Bewegungen ab.

Der Belebtschlammbereich A ist durch eine schräg nach oben unter einem Winkel β ansteigenden Trennwand vom Zwischenklärbereich B getrennt. Die Neigung der Trennwand kann mittels Gelenken 11 an verstellbaren Stützfüßen verstellt werden. Die Trennwand 5 weist an ihrem in Bezug auf den Beckenboden 20 unteren Bereich eine oder mehrere Auslaßöffnung 7 auf, um einen Fluß aus dem Belebtschlammbereich A in den Zwischenklärbereich B, zu ermöglichen. Der Zwischenklärbereich B endet in einer schräg nach oben, unter einem Winkel α ansteigenden Trennwand 6. Die Steigung der Trennwand 6 ist ebenfalls wieder verstellbar. Die Trennwand 6 weist an ihrem in Bezug auf den Beckenboden oberen Bereich mindestens eine Auslauföffnung 8 auf, um einen Fluß aus dem Zwischenklärbereich in den Nachklärbereich zu ermöglichen. Die Überlaufvorrichtung 8 ist im Bereich der Klarwasserzone KWZ angebracht und liegt in der Regel unterhalb des Wasserspiegels.

Die durch die beiden Trennwände 5 und 6 begrenzte Zwischenklärzone B weist eine horizontale Absetzfläche 26 auf, in der sich Schlamm 16 absetzen und eindicken kann, um zurückgeführt oder abgezogen zu werden.

In diesem Bereich sind eine oder mehrere quer zum Becken wandernde Vorrichtungen 12 zum Aufsaugen des Schlamms 16 angeordnet. Natürlich ist alternativ zu dieser Lösung auch eine Schlammrinne mit einer Absaugvorrichtung denkbar. Auch kann die an sich horizontale Sohle der Zonen B und/oder D unterhalb der Sohle des Gesamtbeckens liegen und auch trichterförmig sein.

Im Nachbelüftungsbereich C befinden sich weitere Belüftungsvorrichtungen 3, wobei wieder im Becken an flexiblen Ketten über Schwimmer Belüftungskörper hin- und hergehend gehalten werden, über die Luft oder Sauerstoff und Bewegung eingetragen wird. Der Nachbelüftungsbereich C ist von dem Nachsedimentationsbereich D durch eine Tauchwand 9 getrennt, die im unteren Bereich in Bezug auf den Beckenboden 20 eine oder mehrere Durchtrittsöffnungen 21 beläßt, durch die das Abwasser aus dem Nachbelüftungsbereich C in den Nachsedimentationsbereich D strömen kann. Auch diese Wand kann wie 5. und 6. schräg ausgeführt sein. Im Nachsedimentationsbereich, der ebenfalls eine horizontal verlaufende Schlammabsetzfläche aufweist, ist ein zweiter Schlammaufnehmer 12' angebracht. Auf einem höheren Niveau folgt nach dem Nachsedimentationsbereich ein Pflanzenfilter E, der durch eine Trennwand 13' von Bereich D und durch Trennwand 13 von einem Endfilter F getrennt ist.

Dem Bereich A kann auch ebenfalls durch eine Wand entsprechend 5 oder 9 ein mechanisch umgewälzter Bereich BP vorgeschaltet sein.

Durch geeignetes Positionieren der Trennwände 5, 6, 9 können die Volumina der einzelnen Bereiche variiert werden.

Dieses Ausführungsbeispiel weist Verstärkungen 28 zur Längsverschiebung und Positionierung der Trennwände 5 und 6 im Bodenbereich unter den Trennwänden 5 und 6 auf.

Die erfindungsgemäße Vorrichtung arbeitet in der nachstehend angegebenen Weise.

Das zu klärende Abwasser 4 wird über den Zulauf 14 in das Becken 1 in den Belebtschlammbereich A oder vom Becken BP eingeleitet. Im Belebtschlammbereich A läuft der Belebtschlammprozeß ab. Im Bio-P-Bereich BP laufen die die biologische P-Eleminierung fördernden Effekte ab. Die hin- und herwandernden Belüfterketten 3 halten durch entsprechend verteilte Installation das gesamte Belebtschlammbereichvolumen A mit allen Schwebstoffen in Vermischung und Umwälzung, wobei gleichzeitig das gesamte Volumen des Belebtschlammbereichs feinblasig belüftet wird. Die zugeführte Luftmenge wird ausgehend von einer Grundlast entsprechend dem eingestellten Sauerstoffbedarf automatisch festgelegt oder halbautomatisch durch Einstellung von Zeitschaltuhren geregelt, ohne daß dabei der Mindesteintrag zur Vermischung des Belebtschlammes unterschritten werden darf. In diesem Bereich findet der aerobe Abbauprozeß der Schmutzbestandteile statt.

Da das Abwasser auf gegenüberliegenden Seiten des Beckens eingeleitet und entnommen wird, entsteht im Becken vom Zulauf 14 zum Ablauf 15 eine Strömung. Somit wird das Abwasser zusammen mit dem in ihm schwebenden und durch die Lufteinleitung permanent umgewälzten Belebtschlamm langsam in Richtung der Trennwand 5 bewegt, wo es durch die große Durchflußfläche bereits beruhigt ankommt, und durch einen großen Einlaufspalt oder große Einlauflöcher 7 in den Zwischenklärbereich B beruhigt und langsam strömt. Durch die Wirkung der Trennwände 5, 6 wird der Schlamm im Bereich B in erforderlichem Umfang zum Absetzen und auf der horizontalen Absetzfläche 26 zum Eindicken gebracht. Das Wasser durchläuft die gekennzeichnete Trennzone TZ schräg nach oben quasi vertikal strömend im wesentlichen oberhalb der Absetzfläche. Oberhalb dieser Trennzone kommt es zur Ausbildung einer Filterhilfsschicht RS, die durch feine Schwebeteilchen gebildet wird, deren Sinkgeschwindigkeit in etwa der Steigegeschwindigkeit der Strömung entspricht, so daß auch nicht oder nur langsam absetzende Teilchen eingefangen und dann mit sinkenden Klumpen endgültig abgetrennt werden. Die Auslauföffnungen 8 befindet sich oberhalb dieser Filterhilfsschicht in der Klarwasserzone zumeist unterhalb des Wasserspiegels. In der großen horizontalen Absetzfläche 26, die 4 m und länger sein kann und sich in der Regel über die ganze Beckenbreite erstreckt, findet hier eine Flächeneindickung in "Dünnschicht" statt, d.h., die sich absetzenden Belebtteilchen werden in dünner Schicht abgesetzt, im Gegensatz zu einer mehr oder weniger V-förmigen Rinne, in der eine Eindickung mit der damit einhergehenden Gefahr des Absterbens des Schlamms und der Bildung von Wasserlinsen verbunden ist. Hier finden nun in bekannterweise die Vorteile der Dünnschicht bei Trennung und Eindickung ihre Wirkung. Nachdem die Absetzzone sich strömungsmäßig aus vertikalen und horizontalen Komponenten zusammensetzt, kann davon gesprochen werden, daß bei dieser Art von Flächenklärung eine günstige Mischung von horizontalem und vertikalem Klärer gegeben ist, die die Vorteile der horizontalen und vertikalen Klärer vereint. Wenn sich eine ausreichende Menge Belebtschlamm auf der Absetzfläche 26 abgesetzt hat, kann dieser über einen über die Absetzfläche normalerweise senkrecht zur Hauptströmungsrichtung hin- und herbewegbaren Aufnehmer 12 abgesaugt werden. Der Aufnehmer 12 kann beispielsweise von der Wasseroberfläche her angetrieben werden und dort schwimmend aufgehängt sein und eine Saugpumpe mitführen. Er führt den Schlamm in den Rücklauf oder zum Schlammpolder.

Das so weitgehend gereinigte Abwasser 4 strömt durch die Überlaufvorrichtung 8 der Trennwand 6 in den Nachbelüftungsbereich C, wo wiederum mit Hilfe von Belüftungsvorrichtungen 3 das Abwasser umgewälzt und vor allem mit Sauerstoff versorgt wird, um z. B. restliche Schwebeteilchen abzubauen und das Wasser ganz oder teilweise mit Sauertoff zu sättigen.

Der Nachbelüftungsbereich C ist durch eine Tauchwand 9 von dem Nachsedimentationsbereich D getrennt, durch dessen Öffnungen 21 das Abwasser in den Nachsedimentationsbereich D strömt. Im Nachsedimentationsbereich setzen sich noch im Abwasser verbliebene oder bei gestörtem Prozeß in A noch bei 8 überfließende Schlammteilchen auf der Absetzfläche 20 ab, und können auch hier wieder mit Hilfe einer oder mehrerer Schlammaufnehmervorrichtungen 12 abgesaugt werden.

Im Anschluß wird das vorgereinigte Abwasser mit Hilfe von Pflanzenwurzeln und Endfiltern E, F gefiltert. Das auf diese Art und Weise gereinigte Abwasser wird über den Schwimmerüberlauf S entsprechend der DE-A-32 41 595 durch die Abwasserrohre 25 abgeführt. Der Schwimmerüberlauf S kann in seiner Durchflußleistung eingestellt werden, wodurch unabhängig vom Zulauf ein geregelter Abfluß und eine Pufferung erreicht wird.

Mit Hilfe der durch 30 dargestellten Pumpen ist eine Schlammrückführung aus den Bereichen B und D in ein Schlammpolderbecken oder zurück in Bereich A vorgesehen. Natülich können die Pumpen auch an anderer Stelle des Absaug- und Rückführungssystems vorgesehen werden.

Selbstverständlich beschränkt sich die vorliegende Erfindung nicht auf das oben aufgeführte Ausführungsbeispiel. Die Erfindung ermöglicht ein Becken 1 in beliebig viele Klärbereiche (A-n) beliebiger Abfolge einzuteilen und die Kapazität der Anlage entweder durch Vergrößerung des Belebtschlammbereichs A bzw. der Einzelbereiche, oder durch Parallelbetrieb von mehreren Becken zu erweitern. Besonders vorteilhaft ist es, daß die Ausführung eine Anpassung an geringere Anfangsbelastungen oder ein variierendes Verhältnis zu hydraulischer und biochemischer Belastung zuläßt. Auch können nach D, E oder F beliebig große Speicherbecken für das weitgehend gereinigte Wasser direkt angeschlossen sein z.B. zur Weiterverwendung.

## Patentansprüche

1. Verfahren zum Reinigen von Abwasser in mehreren aufeinanderfolgenden Phasen, wobei in einer ersten Phase (A) in einem Belebtschlammbereich das Abwasser belüftet und dann in einer zweiten Phase (B), die eine Schlammrückführung aufweist, zwischengeklärt wird und wobei dann in einer dritten Phase (C) eine Nachbelüftung erfolgt, indem das Abwasser umgewälzt und vor allem mit Sauerstoff versorgt wird, um somit das Wasser ganz oder teilweise mit Sauerstoff zu sättigen, und in einer vierten Phase (D) eine Nachsedimentation erfolgt, **dadurch gekennzeichnet**, daß alle vier Phasen (A bis D) in einem Becken (1) durchgeführt werden, wobei das Abwasser (4) für die Zwischenklärphase (B) in Hauptströmungsrichtung aus dem Belebtschlammbereich (A) durch mindestens eine Auslaßöffnung (7), die im unteren Bereich in bezug auf den Beckenboden (20) einer ersten Trennwand (5) angeordnet ist, in den Zwischenklärbereich (B) strömt, wo sich der Belebtschlamm absetzt und mit Hilfe eines Schlammaufnehmers (12) aufgesaugt und zumindest teilweise in den Belebtschlammbereich für die erste Phase (A) zurückgeführt wird.

2. Verfahren nach Anspruch 1, **dadurch gekennzeichnet**, daß in der Belüftungsphase (A) das Abwasser (4) in dem Belebtschlammbereich (A) des Beckens (1) eingelassen und dann mit Luft oder Sauerstoff belüftet und umgewälzt wird, so daß ein aerober Abbauprozeß ablaufen kann.

3. Verfahren nach Anspruch 1,**dadurch gekennzeichnet**, daß das Abwasser (4) in der Phase der Nachbelüftung (C) aus dem Zwischenklärbereich (B) über Auslauföffnungen (8) am in Bezug auf den Beckenboden (20) oberen Bereich einer zweiten Trennwand (6) in den Nachbelüftungsbereich (C) strömt, wo es erneut mit Sauerstoff belüftet und umgewälzt wird.

4. Verfahren nach Anspruch 1, **dadurch gekennzeichnet**, daß das Abwasser (4) in der Nachsedimentationsphase (D) aus dem Nachbelüftungsbereich (C) durch den unteren Bereich einer weiteren Trennwand (9) in den Nachsedimentationsbereich (D) fließt, wo sich Schlammreste absetzen und mit Hilfe eines zweiten Schlammaufnehmers (12') aufgesaugt werden.

5. Verfahren nach Anspruch 1, **dadurch gekennzeichnet**, daß das Abwasser nach den Reinigungsphasen (A-D) in einer Filterphase (E, F) durch einen Pflanzen- (E) und Endfilter (F) fließt und anschließend gereinigt aus dem Becken strömt.

6. Verfahren nach Anspruch 1, **dadurch gekennzeichnet**, daß die Volumina der einzelnen Phasenbereiche (A-D) variabel sind, und durch geeignete Positionierung der Trennwände (5, 6, 9) an die Zulauffracht und den Reinigungssprozeß angepaßt werden.

7. Vorrichtung zur Durchführung des Verfahrens nach Anspruch 1 zum Reinigen von Abwasser mit mehreren Bereichen, nämlich einem Belebtschlammbereich, einem Zwischenklärbereich mit einem Schlammaufnehmer zum Absaugen und zumindest teilweise Rückführen von Schlamm in den Belebtschlammbereich, mit einem Nachbelüftungsbereich, in dem das Wasser vor allem mit Sauerstoff versorgt wird und mit einem Nachsedimentationsbereich, **dadurch gekennzeichnet**, daß die Bereiche (A-D) in einem Becken (1) angeordnet sind, wobei das Becken (1) durch Trennwände (5, 6, 9) aufgeteilt ist und die Trennwand (5) zwischen Belebtschlammbereich (A) und Zwischenklärbereich (B) an ihrem in bezug auf den Beckenboden (20) unteren Bereich eine Auslaßöffnung (7) aufweist, um einen Fluß aus dem Belebtschlammbereich (A) in den Zwischenklärbereich (B) zu ermöglichen und die Trennwand (6) zwischen Zwischenklärbereich (B) und Nachbelüftungsbereich (C) an ihrem in bezug auf den Beckenboden (20) oberen Ende Auslauföffnungen (8) aufweist, um einen Fluß aus dem Zwischenklärbereich (B)in den Belüftungsbereich (C) zu ermöglichen.

8. Vorrichtung nach Anspruch 7, **dadurch gekennzeichnet**, daß das Becken (1) ein befestigtes Erdbecken ist.

9. Vorrichtung nach Anspruch 7, **dadurch gekennzeichnet**, daß der Beckenboden und die Wände mit Dichtungsbahnen (2) abgedeckt sind.

10. Vorrichtung nach Anspruch 7, **dadurch gekennzeichnet**, daß als Dichtungsbahn (2) eine oder mehrere Folien vorgesehen sind.

11. Vorrichtung nach Anspruch 7, **dadurch gekennzeichnet**, daß die einzelnen Zonen in folgender Reihenfolge in Hauptströmungsrichtung angeordnet sind: Belebtschlammbereich (A), Zwischenklärbereich (B), Nachbelüftungsbereich (C) und Nachsedimentationsbereich (D).

12. Vorrichtung nach Anspruch 7, **dadurch gekennzeichnet**, daß am Ende des Beckens (1) zusätzlich ein Filter (E, F) auf einem höheren Niveau als die restlichen Bereiche (A-D) angebracht ist.

13. Vorrichtung nach Anspruch 12, **dadurch gekennzeichnet**, daß der Filter (E, F) aus einem Pflanzenfilter und einem Endfilter besteht, die beide durch eine Trennwand (13) voneinander getrennt sind.

14. Vorrichtung nach Anspruch 12, **dadurch gekennzeichnet**, daß die Trennwand den Wasserstrom von E nach F auf seine ganze Länge vergieichmäßigt.

15. Vorrichtung nach Anspruch 7, **dadurch gekennzeichnet**, daß der Vorrichtung wenigstens eine weitere Vorrichtung mit Bereichen A und B parallelgeschaltet ist, wobei der Bereich B der weiteren Vorrichtung mit dem Bereich C der Vorrichtung verbunden ist.

16. Vorrichtung nach Anspruch 7, **dadurch gekennzeichnet**, daß der Zwischenklärbereich (B) in einer schräg nach oben, unter einem Winkel α ansteigenden Trennwand (6) endet.

17. Vorrichtung nach Anspruch 7, **dadurch gekennzeichnet**, daß der Belebtschlammbereich (B) in einer schräg nach oben unter einem Winkel β ansteigenden Trennwand (5) endet.

18. Vorrichtung nach Anspruch 7, **dadurch gekennzeichnet**, daß die Auslaßöffnungen 7 in einem Bereich vom Beckenboden bis maximal 30% der Tauchwandhöhe angeordnet sind.

19. Vorrichtung nach Anspruch 7, **dadurch gekennzeichnet**, daß die Trennwand (9), die den Nachbelüftungsbereich (C) von dem Nachsedimentationsbereich (D) trennt, eine Tauchwand ist, die an ihrem in Bezug auf den Beckenboden (20) unteren Bereich mindestens eine Durchflußöffnung (21) aufweist.

20. Vorrichtung nach Anspruch 19, **dadurch gekennzeichnet**, daß die Durchflußöffnungen 21 in einem Bereich vom Beckenboden bis maximal 30 % der Tauchwandhöhe angeordnet sind.

21. Vorrichtung nach Anspruch 7, **dadurch gekennzeichnet**, daß mindestens eine der Trennwände (5, 6, 9) eine Tauchwand ist.

22. Vorrichtung nach Anspruch 7, **dadurch gekennzeichnet**, daß die Steigung der Trennwände (5, 6) über Gelenke (11) eingestellt werden kann.

23. Vorrichtung nach Anspruch 7, **dadurch gekennzeichnet**, daß die Trennwände (5, 6, 9) ortsfest im Becken ausgebildet sind.

24. Vorrichtung nach einem der Ansprüche 7 bis 23, **dadurch gekennzeichnet**, daß die Trennwände (5, 6, 9) beweglich im Becken angeordnet sind, um die Volumina der einzelnen Teilbereiche zu verändern.

25. Vorrichtung nach Anspruch 7, **dadurch gekennzeichnet**, daß der Zwischenklärbereich (B) und der Nachsedimentationsbereich (D) horizontale Absetzflächen und einen Schlammaufnehmer (12) aufweisen.

26. Vorrichtung nach Anspruch 25, **dadurch gekennzeichnet**, daß der Zwischenklärbereich B und oder der Nachsedimentationsberreich D unter dem sonstigen Beckenboden liegende Absätzflächen aufweisen.

27. Vorrichtung nach Anspruch 7, **dadurch gekennzeichnet**, daß in dem Zwischenklärbereich (B) eine Schlammrinne (21) ausgebildet ist.

28. Vorrichtung nach Anspruch 7, **dadurch gekennzeichnet**, daß mindestens zwei Becken (1) parallel zueinander angeordnet sind.

29. Vorrichtung nach Anspruch 7, **dadurch gekennzeichnet**, daß am Ende des Beckens (1) ein Schwimmerüberlauf (S) ausgebildet ist.

30. Vorrichtung nach Anspruch 7, **dadurch gekennzeichnet**, daß die vorrichtung zusätzlich ein oder mehrere Schlammpolderbecken (G) aufweist.

31. Vorrichtung nach Anspruch 7, **dadurch gekennzeichnet**, daß den Bereichen A-D, oder A-F ein Bio-P-Becken vorgeschaltet ist.

## Claims

1. A process for purifying waste water in several successive phases, wherein the waste water is aerated in a first phase (A) in an activated sludge zone and then undergoes intermediate sedimentation in a second phase (B) which has a sludge recycle, and wherein post-aeration then takes place in a third phase (C), the waste water being circulated and, in particular, supplied with oxygen hence to saturate the water wholly or partially with oxygen, and a final sedimentation takes place in a fourth phase (D), characterised in that all four phases (A to D) are carried out in a tank (1), wherein the waste water (4) for the intermediate sedimentation phase (B) flows in the main direction of flow out of the activated sludge zone (A) through at least one outlet opening (7), which is arranged in the lower region of a first partition wall (5) in relation to the tank floor (20), into the intermediate sedimentation zone (B), where the activated sludge settles and is removed by suction with the aid of a sludge collector (12) and is recycled at least partially to the activated sludge zone for the first phase (A).

2. A process according to claim 1, characterised in that in the aeration phase (A), the waste water (4) is admitted to the activated sludge zone (A) of the tank (1) and then aerated with air or oxygen and circulated so that an aerobic decomposition process can take place.

3. A process according to claim 1, characterised in that the waste water (4) in the phase of post-aeration (C) flows out of the intermediate sedimentation zone (B) via outlet openings (8) in the upper region of a second partition wall (6) in relation to the tank floor (20) into the post-aeration zone (C) where it is again aerated with oxygen and circulated.

4. A process according to claim 1, characterised in that the waste water (4) in the final sedimentation phase (D) flows out of the post-aeration zone (C) through the lower region of a further partition wall (9) into the final sedimentation zone (D) where sludge residues settle and are removed by suction with the aid of a second sludge collector (12').

5. A process according to claim 1, characterised in that the waste water after the purification phases (A-D) flows through a plant (E) and final filter (F) in a filter phase (E,F) and subsequently flows in the purified form out of the tank.

6. A process according to claim 1, characterised in that the volumes of the individual phase zones (A-D) are variable and adjusted to the inflow load and the purification process by placing the partition walls (5,6,9) in a suitable position.

7. A device for carrying out the process according to claim 1 for purifying waste water with several zones, namely an activated sludge zone, an intermediate sedimentation zone with a sludge collector for removing sludge by suction and returning it at least partially to the activated sludge zone, with a post-aeration zone, in which the water is supplied in particular with oxygen, and with a final sedimentation zone, characterised in that the zones (A-D) are arranged in a tank (1), wherein the tank (1) is divided up by partition walls (5, 6, 9) and the partition wall (5) between activated sludge zone (A) and intermediate sedimentation zone (B) has an outlet opening (7) in its lower region in relation to the tank floor (20) in order to permit a flow out of the activated sludge zone (A) into the intermediate sedimentation zone (B), and the partition wall (6) between intermediate sedimentation zone (B) and post-aeration zone (C) has outlet openings (8) at its upper end in relation to the tank floor (20) in order to permit a flow out of the intermediate sedimentation zone (B) into the aeration zone (C).

8. A device according to claim 7, characterised in that the tank (1) is a consolidated earth tank.

9. A device according to claim 7, characterised in that the tank floor and the walls are covered with waterproof sheeting (2).

10. A device according to claim 7, characterised in that one or more films are provided as waterproof sheeting (2).

11. A device according to claim 7, characterised in that the individual zones are arranged in the following order in the main direction of flow:
activated sludge zone (A), intermediate sedimentation zone (B), post-aeration zone (C) and final sedimentation zone (D).

12. A device according to claim 7, characterised in that a filter (E, F) at a higher level than the remaining zones (A-D) is arranged additionally at the end of the tank (1).

13. A device according to claim 12, characterised in that the filter (E, F) comprises a plant filter and a final filter, both being separated from each other by a partition wall (13).

14. A device according to claim 12, characterised in that the partition wall evens out the flow of water from E to F over its entire length.

15. A device according to claim 7, characterised in that at least one further device with zones A and B is installed parallel to the device, wherein the zone B of the further device is linked with the zone C of the device.

16. A device according to claim 7, characterised in that the intermediate sedimentation zone (B) ends in a partition wall (6) sloping upwards at an angle α.

17. A device according to claim 7, characterised in that the activated sludge zone (B) ends in a partition wall (5) sloping upwards at an angle β.

18. A device according to claim 7, characterised in that the outlet openings 7 are arranged in a region from the tank floor up to a maximum of 30% of the height of the downflow baffle.

19. A device according to claim 7, characterised in that the partition wall (9) which separates the post-aeration zone (C) from the final sedimentation zone (D) is a downflow baffle which has at least one outlet (21) in its lower region in relation to the tank floor (20).

20. A device according to claim 19, characterised in that the outlets 21 are arranged in a region from the tank floor up to a maximum of 30% of the height of the downflow baffle.

21. A device according to claim 7, characterised in that at least one of the partition walls (5, 6, 9) is a downflow baffle.

22. A device according to claim 7, characterised in that the gradient of the partition walls (5,6) can be adjusted by means of articulated joints (11).

23. A device according to claim 7, characterised in that the partition walls (5, 6, 9) are stationary in the tank.

24. A device according to one of claims 7 to 23, characterised in that the partition walls (5,6,9) are arranged in a moveable fashion in the tank so as to alter the volumes of the individual partial zones.

25. A device according to claim 7, characterised in that the intermediate sedimentation zone (B) and the final sedimentation zone (D) have horizontal settling surfaces and a sludge collector (12).

26. A device according to claim 25, characterised in that the intermediate sedimentation zone (B) and/or the final sedimentation zone D have settling surfaces lying below the rest of the tank floor.

27. A device according to claim 7, characterised in that a sludge channel (21) is formed in the intermediate sedimentation zone (B).

28. A device according to claim 7, characterised in that at least two tanks (1) are arranged in parallel.

29. A device according to claim 7, characterised in that a float overflow (S) is formed at the end of the tank (1).

30. A device according to claim 7, characterised in that the device additionally has one or more sludge holding tanks (G).

31. A device according to claim 7, characterised in that a bio-P tank is installed upstream of the zones A-D, or A-F.

## Revendications

1. Procedé d'épuration d'eaux résiduaires en plusieurs phases successives, dans lequel, dans une première phase (A), les eaux résiduaires sont aérées dans une zone de boues activées, puis, dans une deuxième phase (B), dans laquelle s'effectue un recyclage des boues, clarifiées de manière intermédiaire, et dans lequel, ensuite, dans une troisième phase (C), a lieu une post-aération par le fait que les eaux résiduaires, sont mises en circulation et sont avant tout alimentées en oxygène pour saturer ainsi l'eau en oxygène, en totalité ou en partie, et dans une quatrième phase (D), a lieu une post-sédimentation, caractérisé en ce que les quatre phases (A à D) sont exécutées dans un bassin (1), les eaux résiduaires (4 s'écoulant dans la zone de clarification intermédiaire (B) pour la phase de clarification intermédiaire (B), dans le sens d'écoulement principal à partir de la zone des boues activées (A) par au moins une ouverture de sortie (7), laquelle est ménagée dans la partie inférieure d'une première cloison (5), par rapport au fond du bassin (20), zone de clarification intermédiaire où se déposent les boues activées et où elles sont récupérées par un collecteur de boues (12), et sont ramenées, au moins partiellement, dans la zone des boues activées pour la première phase (A).

2. Procédé selon la revendication 1, caractérisé en ce que, dans la phase d'aération (A), les eaux résiduaires (4) sont admises dans la zone des boues activées (A) du bassin (1), puis aérées et mises en circulation avec de l'air ou de l'oxygène, de manière à pouvoir réaliser un processus de décomposition aérobie.

3. Procédé selon la revendication 1, caractérisé en ce que les eaux résiduaires (4), dans la phase de post-aération (C), s'écoulent dans la zone de post-aération (C), à partir de la zone de clarification intermédiaire (B) par des ouvertures de sortie (8), dans la partie supérieure d'une deuxième cloison (6), par rapport au fond du bassin zone de post-aération (C), où elles sont de nouveau aérées et mises en circulation avec de l'oxygène.

4. Procédé selon la revendication 1, caractérisé en ce que les eaux résiduaires (4), dans la phase de post-sédimentation (D), s'écoulent de la zone de post-aération (C) par la partie inférieure d'une autre cloison de séparation (9) dans la zone de post-sédimentation (D), où les boues résiduelles se déposent et sont récupérées au moyen d'un deuxième collecteur de boues (12').

5. Procédé selon la revendication 1, caractérisé en ce que les eaux résiduaires, après les phases d'épuration (A-D), s'écoulent par un filtre biologique (E) et un filtre terminal (F), dans une phase de filtrage (E, F), et sortent ensuite, épurées, du bassin.

6. Procédé selon la revendication 1, caractérisé en ce que les volumes de chaque zone de phase (A-D) sont variables et adaptés à la charge d'entrée et au processus d'épuration par une disposition appropriée des cloisons de séparation (5, 6, 9).

7. Dispositif pour réaliser le procédé selon la revendication 1, pour épurer les eaux résiduaires avec plusieurs zones, à savoir, une zone de boues activées, une zone de clarification intermédiaire avec un collecteur de boues pour l'aspiration et au moins partiellement le recyclage des boues dans la zone des boues activées, avec une zone de post-aération, dans laquelle l'eau est avant tout alimentée en oxygène et avec une zone de post-sédimentation, caractérisé en ce que les zones (A-D) sont disposées dans un bassin (1), le bassin (1) étant subdivisé par des cloisons de séparation (5, 6, 9) et en ce que la cloison de séparation (5) présente entre la zone des boues activées (A) et la zone de clarification intermédiaire (B), dans sa partie inférieure, par rapport au fond du bassin (20), une ouverture de sortie (7), destinée à permettre un écoulement de la zone des boues activées (A) vers la zone de clarification intermédiaire (B), et que la cloison de séparation (6) présente entre la zone de clarification intermédiaire (B) et la zone de post-aération (C), comporte à son extrémité supérieure par rapport au fond du bassin (20), des ouvertures de sortie (8), pour permettre un écoulement de la zone de clarification intermédiaire (B) vers la zone d'aération (C).

8. Dispositif selon la revendication 7, caractérisé en ce que le bassin (1) est un bassin de surface stabilisé.

9. Dispositif selon la revendication 7, caractérisé en ce que le fond du bassin et les parois sont recouverts de panneaux d'étanchéité (2).

10. Dispositif selon la revendication 7, caractérisé en ce qu'un ou plusieurs films sont prévus en tant que panneau d'étanchéité (2).

11. Dispositif selon la revendication 7, caractérisé en ce que les zones séparées sont disposées dans l'ordre suivant, dans le sens d'écoulement principal: zone des boues activées (A), zone de clarification intermédiaire (B), zone de post-aération (C) et zone de post-sédimentation (D).

12. Dispositif selon la revendication 7, caractérisé en ce qu'un filtre (E, F) est de plus installé, à l'extrémité du bassin (1), à un niveau supérieur à celui des zones restantes (A-D).

13. Dispositif selon la revendication 12, caractérisé en ce que le filtre (E, F) comprend un filtre biologique et un filtre terminal séparés par une cloison de séparation (13).

14. Dispositif selon la revendication 12, caractérisé en ce que la cloison de séparation homogénéise, sur toute sa longueur, le flux d'eau de E à F.

15. Dispositif selon la revendication 7, caractérisé en ce qu'au moins un autre dispositif comportant des zones A et B, est monté en parallèle avec le dispositif, la zone B de l'autre dispositif étant reliée avec la zone C du dispositif.

16. Dispositif selon la revendication 7, caractérisé en ce que la zone de clarification intermédiaire (B) se termine en une cloison de séparation (6) montante, inclinée vers le haut selon un angle α.

17. Dispositif selon la revendication 7, caractérisé en ce que la zone des boues activées (B) se termine en une cloison de séparation (5) montante, inclinée vers le haut selon un angle β.

18. Dispositif selon la revendication 7, caractérisé en ce que les ouvertures de sortie 7 sont disposées dans une zone allant du fond du bassin à 30 % au maximum de la hauteur de la paroi plongeuse.

19. Dispositif selon la revendication 7, caractérisé en ce que la cloison de séparation (9), qui sépare la zone de post-aération (C) de la zone de post-sédimentation (D), est une paroi plongeuse qui présente, sur sa partie inférieure, par rapport au fond du bassin (20), au moins une ouverture formant passage (21).

20. Dispositif selon la revendication 19, caractérisé en ce que les ouvertures formant passages (21) sont disposés dans une zone allant du fond du bassin à 30 % au maximum de la hauteur de la paroi plongeuse.

21. Dispositif selon la revendication 7, caractérisé en ce qu'au moins l'une des cloisons de séparation (5, 6, 9) est une paroi plongeuse.

22. Dispositif selon la revendication 7, caractérisé en ce que la pente des cloisons de séparation (5, 6) peut être réglée au moyen d'articulations (11).

23. Dispositif selon la revendication 7, caractérisé en ce que les cloisons de séparation (5, 6, 9) sont conçues de manière fixe dans le bassin.

24. Dispositif selon l'une quelconque des revendications 7 à 23, caractérisé en ce que les cloisons de séparation (5, 6, 9) sont disposées de manière mobile dans le bassin pour faire varier le volume de chaque sous-zone.

25. Dispositif selon la revendication 7, caractérisé en ce que la zone de clarification intermédiaire (B) et la zone de post-sédimentation (D) présentent des zones de décantation horizontales et un collecteur de boues (12).

26. Dispositif selon la revendication 25, caractérisé en ce que la zone de clarification intermédiaire B et/ou la zone de post-sédimentation D présente(nt) des zones de décantation horizontales sous le fond du bassin restant.

27. Dispositif selon la revendication 7, caractérisé en ce qu'un chêneau de boue (21) est ménagé dans la zone de clarification intermédiaire (B).

28. Dispositif selon la revendication 7, caractérisé en ce qu'au moins deux bassins (1) sont disposés parallèlement l'un à l'autre.

29. Dispositif selon la revendication 7, caractérisé en ce qu'un trop-plein à flotteur (S) est prévu à l'extrémité du bassin (1).

30. Dispositif selon la revendication 7, caractérisé en ce que le dispositif présente, de plus, un ou plusieurs bassins de séchage des boues (G).

31. Dispositif selon la revendication 7, caractérisé en ce qu'un bassin bio-P est placé en amont des zones A-D, ou A-F.
